# EUROPEAN PATENT APPLICATION

(11) **EP 1 986 109 A1**
(43) Date of publication of application: **29.10.2008**
(21) Application number: 07300995.3
(22) Date of filing: 26.04.2007
(51) Int. Cl.: G06F 17/30

(54) **Obtaining feedback for an accessed information item**

(71) Applicant: Hewlett-Packard Development Company, L.P., Houston TX 77070 (US)
(72) Inventor: Boudalier, Pascal, 38053, Grenoble Cedex 09 (FR)
(74) Representative: Franks, Adam Peter

(57) **Abstract**

A method comprising: associating a user and an information item accessed by the user; and delaying provision to the user of a prompt to provide feedback on the accessed information item until a later time that is dependent upon the accessed information item.

## Description

### FIELD OF THE INVENTION

Embodiments of the present invention relate to obtaining feedback for an accessed information item.

### BACKGROUND TO THE INVENTION

When a user accesses an information item it is not always apparent how useful that information item is and consequently whether the user should rely upon the information item

A user may access an information item because she believes it will be useful. It would be desirable to obtain feedback from the user on the usefulness of the information item.

### BRIEF DESCRIPTION OF VARIOUS EMBODIMENTS OF THE INVENTION

According to various embodiments of the invention there is provided a method comprising: associating a user and an information item accessed by the user; and delaying provision to the user of a prompt to provide feedback on the accessed information item until a later time that is dependent upon the accessed information item.

According to various embodiments of the invention there is provided an apparatus comprising: a memory configured to store a data structure associating a user and an information item accessed by the user; and processing circuitry arranged to use the accessed information item to determine a later time and arranged to provide, at the later time, a prompt to provide feedback on the accessed information item

According to various embodiments of the invention there is provided a method comprising: detecting user selection of an information item; and prompting, at a later time, a user to provide feedback on the information item, wherein the later time is dependent upon the information item.

According to various embodiments of the invention there is provided a method comprising: associating a user and an information item accessed by the user; and delaying provision to the user of a prompt to provide feedback on the accessed information item until a later time that is dependent upon a context of the user.

The prompt is provided to the user *a posteriori* in that it is not provided when the information item is accessed but is provided at a later time that is decoupled from that access time. The later time may be determined intelligently as a time when the user is likely to be prepared to leave feedback or leave accurate feedback.

### BRIEF DESCRIPTION OF THE DRAWINGS

For a better understanding of various embodiments of the present invention reference will now be made, by way of example only, to the accompanying drawings in which:
Fig 1 schematically illustrates a network comprising a prompting system for triggering a prompt with delay at a user apparatus;
Fig. 2 schematically illustrates one of various potential implementations of the prompting system;
Fig. 3 schematically illustrates one of various potential implementations of a user apparatus;
Fig 4A schematically illustrates a method for automatically generating a feedback prompt with a delay;
Fig 4B schematically illustrates a more detailed method for automatically generating a feedback prompt with a delay;
Fig 5 schematically illustrates a disruptive visual prompt.

### DETAILED DESCRIPTION OF VARIOUS EMBODIMENTS OF THE INVENTION

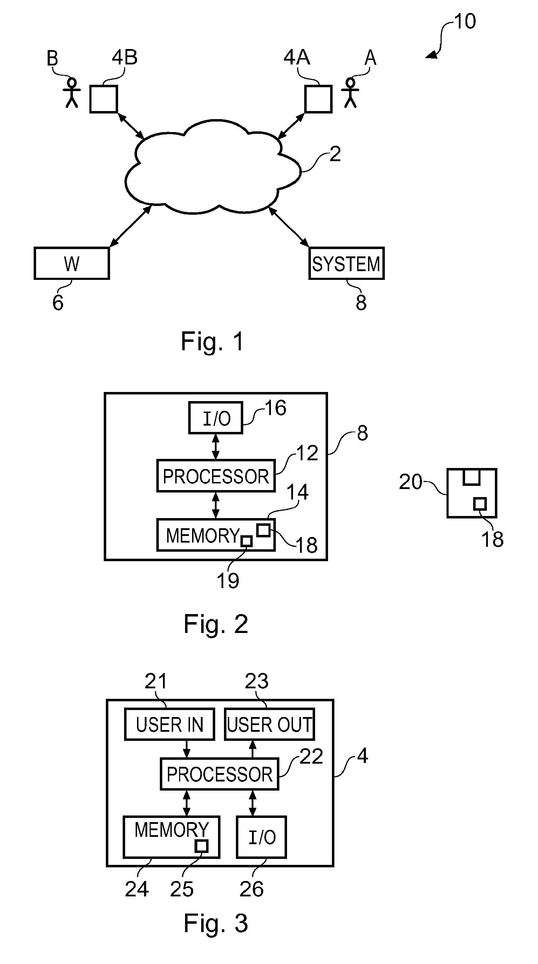

**Fig 1** schematically illustrates a network 10 comprising a first apparatus 4A operated by a first user A, a second apparatus 4B operated by a second user B, a content server 6, a prompting system 8 and a telecommunications network 2. The network 10 may have additional users and apparatuses 4 and/or may have additional content servers 6 and/or may have additional systems 8. It is also possible for a content server 6 and a system 8 to be integrated as a single entity. It is also possible for a system 8 and an apparatus 4 to be integrated as a single entity.

The telecommunications network 2 provides a suitable protocol by which the components of the network 4, 6, 8 may communicate. Different embodiments of the telecommunications network 2 may use different physical interfaces for communicating. For example, the telecommunication network may be wholly or partially wireless and/or may be wholly or partially wired.

The first apparatus 4A may be a telecommunication network terminal such as, for example, a cellular mobile telephone, a WLAN access device, an Internet access device, a device capable of wireless communication using the BLUETOOTH system etc. The first user A may, for example, be a member of the public.

The second apparatus 4B may also be a telecommunication network terminal such as, for example, a cellular mobile telephone, a WLAN access device, an Internet access device, a device capable of wireless communication using the BLUETOOTH system etc. The second user B may, for example, be a member of the public.

The content server 6 publishes a plurality of information items which are accessible to users of the network 10. The information items may be, for example, reviews and/or comments and/or opinions etc. The content server 6 may be a web-server.

The prompting system 8 uses an information item accessed by a user of an apparatus 4A, 4B ... to determine when a prompt, for that user to provide feedback on the information item, should be triggered at the apparatus 4A, 4B .... The prompt is triggered with a delay relative to the access to the information item.

**Fig. 2** schematically illustrates one of various potential implementations of the system 8. The illustrated system 8 comprises processing circuitry 12; an input/output interface 16 and a memory 14 configured to store a computer program 18, one or more data structures 19 associating one or more users and one or more information items and one or more user profiles.

The processing circuitry 12 may be implemented using any suitable combination of hardware, firmware and software. In the example illustrated, the processing circuitry is one or more processors of a computer that reads a computer program 18 from the memory 14. In other implementations, the processing circuitry 12 may be provided by hardware, for example, an application specific integrated circuit.

The memory 14 although illustrated as a single block may include one or more distinct memory devices. The memory stores the computer program 18. The processing circuitry 22 is configured to read from and write to the memory 25.

The input/output interface 16 is configured to interface with the telecommunications network 2. The input/output interface may, for example, comprise a modem, a radio transceiver, a network adapter etc. The processing circuitry 12 provides data to the input/output interface 16 and receives data from the input/output interface 16.

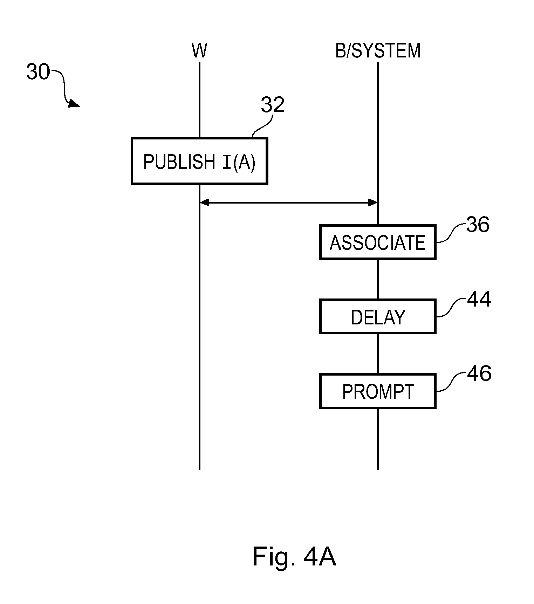

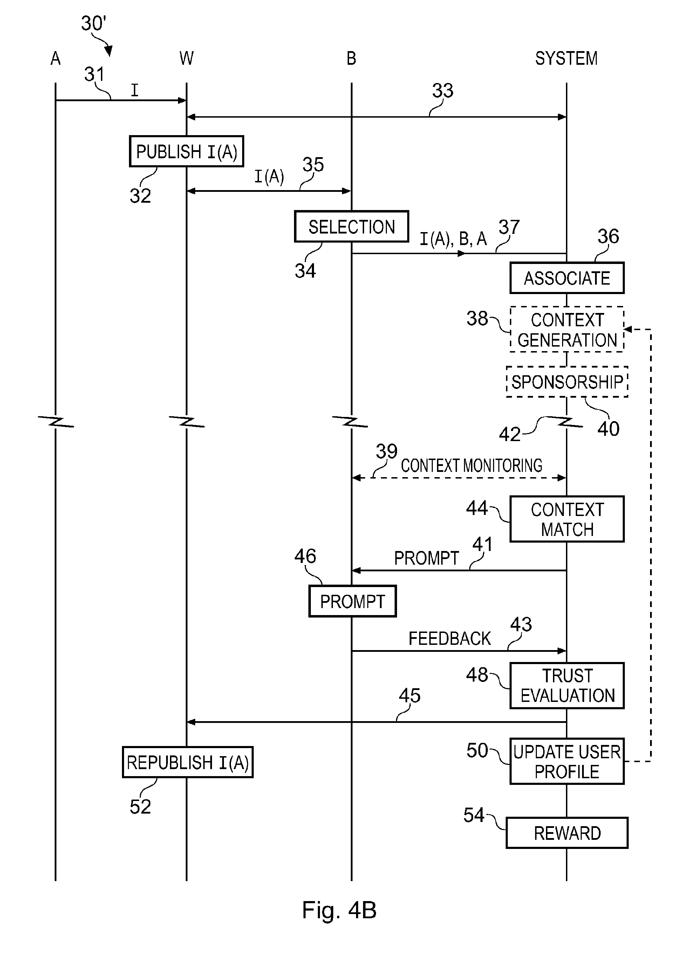

The computer program 18 controls the operation of the system 8 when loaded into the processing circuitry 12. The computer program 18 has computer readable instructions that provide the logic and routines that enable the system 8 to perform the methods illustrated in Figs 4A and 4B.

The computer program 18 may arrive at the system 8 via an electromagnetic carrier signal or be copied from a physical entity 20 such as a computer program product, a memory device or a record medium such as a CD-ROM or DVD.

**Fig. 3** schematically illustrates one of various potential implementations of an apparatus 4A, 4B etc. The apparatus 4 comprises processing circuitry 22; a memory 24; a user input interface 21; a user output interface 23 and an input/output interface 26 The processing circuitry 22 may be implemented using any suitable combination of hardware, firm ware and software. In the example illustrated, the processing circuitry is one or more processors of a computer that reads a computer program 25 from the memory 24. In other implementations, the processing circuitry may be provided by hardware, for example, an application specific integrated circuit.

The memory 25 although illustrated as a single block may include one or more distinct memory devices. The memory stores the computer program 25.
The processing circuitry 22 is configured to read from and write to the memory 25.

The user input interface 21 enables user input to the apparatus. User input may be, for example, via speech and/or touch using, for example, a microphone and/or a keypad, touch screen, joystick, cursor control device etc. The user input interface 21 provides commands to the processing circuitry 22.

The user output interface 23 enables the presentation of information to a user. The presentation may be via audio output and/or visual output and/or tactile output. A loudspeaker or audio-out jack may be provided for audio output and a display may be provided for visual output. The processing circuitry 22 provides commands to the user output interface 23.

The input/output interface 26 is configured to interface with the telecommunications network 2. The input/output interface may, for example, comprise a modem, a radio transceiver, a network adapter etc. The processing circuitry 22 provides data to the input/output interface 26 and receives data from the input/output interface 26.

The apparatus 4 is configured to operate as a first apparatus 4A by a computer program. The computer program enables the first user A to operate the first apparatus 4A to publish an information item on the content server 6. It may also enable the first user A to author the information item using the first apparatus 4A.

An apparatus 4 is configured to operate as a second apparatus 4B by the computer program 25. The computer program 25 enables the second user B to operate the second apparatus 4B to access the information item published on the content server 6. The computer program 25 also provides for the intelligent generation of a prompt to the second user B at a time that is dependent upon the accessed information item. The prompt is triggered by the prompting system 8.

The computer program 25 controls the operation of the second apparatus 4B when loaded into the processing circuitry 22. The computer program has computer readable instructions that provide the logic and routines that enable the second apparatus 4B to perform the methods illustrated in Figs 4.

The computer program 25 may arrive at the apparatus 4B via an electromagnetic carrier signal or be copied from a physical entity 20 such as a computer program product, a memory device or a record medium such as a CD-ROM or DVD. The electromagnet signal may propagate or transmit the computer program as a computer data signal.

The computer program configures the second apparatus 4B to detect 34 user selection of an information item I and to prompt 46, at a later time, the user B to provide feedback on the information item I. The prompt is provided automatically in response to a received trigger and the trigger is generated by the prompting system 8 with a delay that is dependent upon the information item.

**Fig 4A** schematically illustrates a method 30 for automatically generating a feedback prompt for the user B with a delay.

An information item I is published 32 on the content server 6.

The second user B accesses the published information item I. An association is formed 36 between the user B and the information item I accessed by the user B. This association enables a trigger generated using the information item I to be used to provide a prompt to the user B.

The method 30 delays 44 the generation of the trigger. The delay results in the prompt for feedback on the accessed information item being provided 46 to the user B at a later time that is dependent upon the accessed information item. The delay may be determined so that the user is more likely to leave feedback on the accessed information item at that later time.

**Fig 4B** schematically illustrates a more detailed method 30' for automatically generating a feedback prompt for the user B with a delay.

The method includes, at the second device 4B, detecting 34 user selection of an information item I and prompting 46, at a later time, the user B to provide feedback on the information item I, where the later time is dependent upon the information item I.

Referring to Fig 4B, the first user A operates the first apparatus 4A to provide 31 an information item I to the content server 6 for publication. The first user A may have authored the information item I, for example, using the first apparatus 4A.

The content server publishes 32 the information item I. It additionally publishes 32 a trust indication 33 received from the system 8 in association with the published information item I. Typically the trust indication 33 is published along with the information item I or a link is provided to access the trust indication 33 from the information item I. The trust indication 33 may, for example, give an indication of the trustworthiness of the user A and, therefore by implication, the trustworthiness of the information item I. The trust indication 33 may be updated dynamically as described in more detail below.

The second user B operates the second apparatus 4B to access the information item I published on the content server 6 and also the trust indication 33 associated with that information item.

The second apparatus 4B detects 34 when a user selects the information item I for use. The selection may be explicit in the sense that a user performs a positive action that explicitly selects the information item I for use or it may be implicit in that it is inferred from the user's actions that a selection has been made.

The system 8 is informed of the selection and obtains data identifying the selected information item I, the user B who has selected the information item I and the user A who published the information item I. Some or all of the data may be provided by the second apparatus and/or the content server 6. For example, in one embodiment, the second apparatus 4B informs 37 the system 8 of the selection typically identifying the selected information item I, and the user B who has selected the information item I and the content server 6 identifies, to the system 8, the user A who published the information item I. In another embodiment, the second apparatus 4B informs 37 the system 8 of the selection typically identifying the selected information item I, the user B who has selected the information item I and the user A who published the information item I.

The system 8 associates the selected information item I and the user B. This will enable, as described below, a trigger 41 to be generated based on the information item I which is used to provide 46 a prompt to the user B.

A context is generated and assigned to the information item I. For example, the information item I may be processed 38 by processing circuitry 12 to generate at least a part of a context that is assigned to the information item. The identity of the author of the information item I may be used to generate at least a part of the context that is assigned to the information item.

A context at a particular time is the values of a set of parameters at that particular time. It may be considered to be a point or volume in a N-dimensional vector space that is spanned by N parameter vectors. The parameters typically specify aspects of an environment of the user B (including dynamic aspects) at that time such as location, presence, type of apparatus 4B, time of day and aspects describing what the user B is doing at that time such as communication status, communication type, nature of content being accessed etc.

The processing circuitry 12 when processing 38 the information item I may extract metadata relating to the information item. This metadata may be included as data fields within the information item or may be generated by the processing circuitry 22 by analysing the content of the information item. The processing circuitry 12 may then use the extracted metadata to define a volume in the N-dimensional vector space i.e. a dynamic context that is assigned to the information item.

The prompting system 2 may also receive dynamic data from the telecommunications network 2 that is used to define the current dynamic context.

As described below, a trigger 41 is generated when a current dynamic context matches the assigned context.

Matching may occur when a current context corresponds with the assigned context. In the N-dimensional space or some dynamically chosen sub-space of N-m parameters, a match typically occurs when the volume of overlap between a monitored current context and the context assigned to the accessed information item exceeds a threshold value.

The generated/assigned context may be used to identify 40 a suitable sponsor for feedback. Certain sponsors may indicate that they would like to be associated with prompts activated by certain contexts. The sponsors may provide or sponsor a reward for a user who responds to the prompt.

The processing circuitry 12 monitors 39 a current context of the user B and on an ongoing basis compares the monitored current context with the assigned context of the information item to detect 44 a match.

When a match is detected 44, a trigger 41 is generated and sent to the user apparatus 4B via the telecommunications network 2. The access method used for communications from the prompting system 8 to the user apparatus 4B may be different from the access method used by the user apparatus 4B to access the content server 6.

The time at which the trigger 41 is generated is later than the time at which the user selected the information item, possibly considerably later. The time separation or delay will probably arise at least in part because of a delay in obtaining a match between a current context and the assigned context. It may also arise in part because a delay 42 may be introduced before the monitoring 39 is initiated.

The delay 42 introduces a minimum delay between the time at which the trigger 41 is generated and the time at which the user selected the information item. The delay 42 may be specified to provide enough time for the user to act upon the information item accessed. This increases the likelihood that any feedback left by the user in response to a prompt is based upon the actual usefulness of the accessed information item rather than its apparent usefulness. The delay 42 may be dependent upon the information item accessed.

The delay 42 may be such that association 36 of the user B and the information item I occurs during a first session but the prompt trigger 41 is provided in a second, later session.

When the second apparatus 4B receives the trigger 41 it automatically produces a prompt using the user output interface 23. Receipt of the trigger 41 may force the second apparatus 4B to provide a prompt immediately or with a delay until a convenient interval.

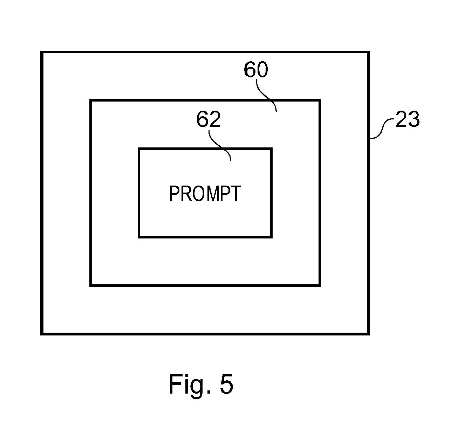

One example of a prompt 62 is illustrated in **Fig 5**. This prompt 62 is a visual prompt. This particular visual prompt 62 is disruptive in that it demands user attention. It appears in front of content 60 displayed in a display of the user output interface 23 and therefore interrupts whatever the user B is doing.

The user may either choose to respond or not respond to the prompt 62 with feedback 43. If the user decides to provide feedback 43, it is entered via the second apparatus 4B using the user input interface 21 and sent to the system 8 via the input/output interface 26.

If feedback 43 is received at the system 8 before a timeout period, the processing circuitry 12 uses the received feedback to update 48 the trust indication 33 for the user A associated with the information item. The effect of the feedback from user B on the trustworthiness of the user A may be weighted by a value that depends upon the identity of the user B.

The updated trust indication 45 for user A may then be sent to the content server 6 where it is republished 52 replacing the original trust indication 33.

Then processing circuitry 12 may update a user profile for user B that records information about that user's preferences. It may, for example, record that a user is more likely to respond when the user is in certain contexts and less likely to respond when the user is in other contexts. For example, the user may only respond to prompts in the evening. The user profile therefore compiles historical information about the user B and that user's preferences. The user profile may be used in the generation 38 of a context for the information item I so that a context is chosen that maximises the likelihood that the user B will respond to a prompt.

The user B may also be rewarded 54 for leaving feedback and the reward may be presented as a part of the prompt. The reward system may be any suitable system. It may for example be an increase in a trust indication for that user or it may be a monetary reward provided by, for example, a sponsor.

If feedback is not received, then the method moves to block 50 for user profile update.

As previously described the network 10 may comprise multiple apparatuses 4 with respective users and one or more content servers 6.

Multiple different information items In may be published 32 on the one or more content servers 6 by one or more users (e.g. user A). When one of many users (e.g. user B) accesses a published information item Iₙ on a content server, an association is formed, by the prompting system 8, between user B and the accessed information item Iₙ. This association enables a trigger generated using the information item In to be used to provide a prompt to user B.

When feedback is received from user B in response to the prompt, the trust evaluation may aggregate that feedback on user A from user B with all previous feedbacks received on user A to calculate an updated trust indication for user A. The previous feedbacks may be from user B or from other users. The feedbacks may be in relation to one information item Iₙ or different information items Iₙ published on one or more content servers 6. The updated trust indication may then be made available to multiple users, for example, via multiple content servers 6.

Although embodiments of the present invention have been described in the preceding paragraphs with reference to various examples, it should be appreciated that modifications to the examples given can be made without departing from the scope of the invention as claimed.

The illustration of a particular order to the blocks in a method does not necessarily imply that there is a required or preferred order for the blocks and the order and arrangement of the block may be varied.

Features described in the preceding description may be used in combinations other than the combinations explicitly described.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method comprising:
associating a user and an information item accessed by the user; and
delaying provision to the user of a prompt to provide feedback on the accessed information item until a later time that is dependent upon the accessed information item.

2. A method as claimed in claim 1, further comprising updating a trust indication to take account of feedback provided by the user in response to the provided prompt.

3. A method as claimed in claim 1 or 2, wherein the later time is additionally dependent upon a profile of the user.

4. A method as claimed in any preceding claim further comprising:
assigning a first context to the accessed information item;
monitoring a current second context of the user; and
determining the later time by identifying a time when the current second context matches the assigned first context.

5. A method as claimed in any preceding claim, wherein a reward is provided to the user when the user provides feedback.

6. A computer program product comprising computer readable instructions that enable a computer to perform the method of any one of claims 1 to 5.

7. An apparatus comprising:
a memory configured to store a data structure associating a user and an information item accessed by the user; and
processing circuitry arranged to use the accessed information item to determine a later time and arranged to provide, at the later time, a prompt to provide feedback on the accessed information item.

8. An apparatus as claimed in claim 7, further comprising an input for receiving feedback, wherein the processing circuitry is arranged to use received feedback to update a trust indication associated with the information item.

9. An apparatus as claimed in claim 7 or 8, wherein the processing circuitry is arranged to use a user profile to determine the later time.

10. An apparatus as claimed in claim 7, 8 or 9, wherein the processing circuitry is arranged to assign a first context to the information item; to monitor a current second context of the user; and to determine the present time as the later time when the current second context matches the assigned first context.
